# EUROPEAN PATENT APPLICATION

(11) **EP 4 459 865 A1**
(43) Date of publication of application: **06.11.2024**
(21) Application number: 22913317.8
(22) Date of filing: 20.07.2022
(51) Int. Cl.: H02S 30/10

(54) **MOUNTING MEMBER**

(30) Priority: 31.12.2021 CN 202111666027
(71) Applicant: A. RAYMOND ET CIE, 38000 Grenoble (FR)
(72) Inventor: ZHENG, Li, Zhenjiang, Jiangsu 212009 (CN); WANG, Wei, Zhenjiang, Jiangsu 212009 (CN)
(74) Representative: Ipside
(86) International application number: PCT/CN2022/106788
(87) International publication number: WO 2023/124028

(57) **Abstract**

Provided is an installation member. The installation member is formed by stamping a metal plate and comprises a top wall and side wall extending from the top wall; the side wall comprises a receiving slot for receiving at least part of the support beam to allow the installation member to be installed to the support beam, and the top wall comprises a fastening hole through which a fastener passes through for fastening the photovoltaic panel frame to the support beam. Providing the fastening hole in the installation member avoids weakening the strength of the support beam itself, and also allows flexible adjustment of the position of the installation member according to the position of the photovoltaic module or the accumulated installation tolerance, so that there is no need to drill new fastening hole on site, and the successful installation of a large number of photovoltaic modules can be ensured.

## Description

### RELATED FIELD

The present disclosure generally relates to the technical field of installation members, and more particularly, to installation members for photovoltaic panels.

### BACKGROUND

At present, a frame of a photovoltaic panel is generally fixed to a support beam through bolts and nuts, especially fixed to a support beam in the form of C-shaped profile. Patent documents CN208806776U, CN214480441U, CN207782737U, CN209120116U, and CN207782738U have disclosed some common bolt fastening schemes in this field. All these schemes require bolt holes to be drilled in the support beam, so that the photovoltaic panels can be subsequently installed onto the support beam through bolts. However, drilling bolt holes in the support beam not only increases the manufacturing procedures and costs of the support beam, but also weakens the strength of the support beam itself. In addition, it is a common practice to install dozens or even hundreds of photovoltaic panels side by side. Further, it is common that, because of the accumulated installation tolerances during the installation process of the formerly-installed photovoltaic panels, the subsequent photovoltaic panels cannot be installed due to the misalignment of the bolt holes, and then new bolt holes must be drilled on site to allow the installation of these subsequent photovoltaic panels, which greatly delays the installation progress.

### SUMMARY

It is an object of the present disclosure to solve the above problems in the prior art and to provide an improved installation member.

For this object, the present disclosure provides an installation member for installing a photovoltaic panel frame to a support beam. The installation member is formed by stamping a metal sheet and includes a top wall and a side wall extending from the top wall. The side wall includes a receiving slot for receiving at least part of the support beam to allow the installation member to be installed to the support beam. The top wall includes a fastening hole through which a fastener passes through for fastening the photovoltaic panel frame to the support beam.

Providing the fastening hole in the installation member avoids weakening the strength of the support beam itself, and also allows flexible adjustment of the position of the installation member according to the position of the photovoltaic module or the accumulated installation tolerance, so that there is no need to drill new fastening hole on site, and the successful installation of dozens or even hundreds of photovoltaic modules can be ensured. Moreover, compared to forming by casting, the installation member formed by stamping a metal sheet has better flexibility, which allows the installation member to better absorb external resistance and avoids damage of the installation member caused by stress concentration.

According to the above technical concept, the present disclosure may further include one or more of the following optional forms.

In some optional forms, the installation member is configured to install the photovoltaic panel frame to the support beam comprising a base and a leg extending from the base, and the receiving slot is configured to receive the leg of the support beam.

In some optional forms, the receiving slot is adapted to be engaged with the leg when the fastener is fastened in place such that the installation member is at least partially located inside the support beam and is fastened to the support beam.

In some optional forms, the receiving slot includes a first section having an inlet end and a second section adjoining the first section and forming an angle with the first section, where the leg of the support beam comprises a leg body extending from the base and a flange bent from the leg body, and the first section and the second section are configured to respectively receive the leg body and the flange of the support beam.

In some optional forms, a width of the first section of the receiving slot is such set to prevent the flange of the support beam from entering the second section in a translational manner from the inlet end. Such design prevents the leg of the support beam from being directly inserted into place (that is, the flange and the leg body of the support beam respectively inserted into the second section and the first section of the receiving slot) in a translational manner, and from another perspective, it also prevents the leg that has been inserted into place from escaping from the receiving slot.

In some optional forms, the width of the first section of the receiving slot is smaller than a width of the flange.

In some optional forms, the top wall extends in a first direction, and the first section of the receiving slot extends substantially in parallel with the first direction.

In some optional forms, the installation member includes a first part and a second part which are respectively located on opposite sides of the first section, and the first part includes the top wall; the support beam comprises two legs respectively arranged on opposite sides of the base, and an opening is defined between the flanges of the two legs; and a dimension of the second part in the first direction is greater than a width of the opening.

In some optional forms, a dimension of the first part in the first direction is greater than the width of the opening.

Setting the dimensions of the first and/or second parts in the first direction to be greater than the width of the opening prevents the installation member in a specific orientation and/or position from falling off the support beam, which will be easily understood through the explanation hereinafter.

In some optional forms, an abutting tab is provided on the side wall, and the abutting tab is arranged on a side, away from the top wall, of the first section so as to abut against an inner side of the leg body of the support beam when the photovoltaic panel frame is fastened to the support beam.

In some optional forms, the abutting tab extends from the side wall toward an exterior of the installation member. The outwardly protruding abutting tab helps to prevent the installation member from falling off the support beam during the installation process, which will be easily understood through the explanation hereinafter.

In some optional forms, a reinforcing rib is provided at a junction between the side wall and the abutting tab.

In some optional forms, a barb is provided on the side wall, and the barb is arranged on a side, close to the top wall, of the first section so as to hook an outer side of the leg body of the support beam when the installation member is installed to the support beam.

In some optional forms, the side wall is provided with a stiffener around the receiving slot.

In some optional forms, the stiffener includes a first stiffener arranged on the side wall along an edge of the receiving slot and surrounding at least an end, away from the first section, of the second section.

In some optional forms, the stiffener includes a second stiffener arranged on the side wall and surrounding at least part of the first stiffener.

In some optional forms, the stiffener includes a third stiffener, and the third stiffener is arranged on the side wall and is close to a junction between the first section and the second section.

In some optional forms, the installation member includes two side walls provided symmetrically, and the two side walls are respectively located on opposite sides of the top wall in a second direction substantially perpendicular to the first direction.

In some optional forms, the installation member includes two bottom walls extending from the two side walls respectively and extending toward each other.

In some optional forms, the installation member includes a limiting structure arranged on at least one of the two bottom walls and configured to prevent the two bottom walls from being misaligned with each other and/or separated from each other.

In some optional forms, one of the two bottom walls comprises a first abutting portion, and the other of the two bottom walls comprises a second abutting portion, and the first abutting portion and the second abutting portion are configured to abut against each other.

In some optional forms, the first abutting portion is in the form of a tab and the second abutting portion is in the form of a recess; or each of the first abutting portion and the second abutting portion is in the form of a folded rim.

In some optional forms, each of the first abutting portion and the second abutting portion is in the form of a folded rim, and the installation member includes a limiting structure arranged on at least one of the first abutting portion and the second abutting portion and configured to prevent the first abutting portion and the second abutting portion from being misaligned with each other and/or separated from each other.

In some optional forms, a folded rim is provided at a lateral edge of the side wall and/or a lateral edge of the bottom wall.

In some optional forms, the installation member includes a stiffener structure, and the stiffener structure includes multiple intersecting stiffeners and extends from the side wall to the corresponding bottom wall.

In some optional forms, a rolled rim is provided at a lateral edge of the side wall and curved toward an the interior of the installation member.

In some optional forms, the top wall is provided with an anti-loosening tab extending toward an exterior of the installation member and having a sharp free end.

In some optional forms, the top wall comprises two anti-loosening tabs arranged in a centrosymmetric manner around the fastening hole, and the free end of each anti-loosening tab points in a direction opposite to an unscrewing direction of the fastener.

In some optional forms, the top wall is integrally formed with a fastening nut defining the fastening hole.

The installation member according to the present disclosure can avoid drilling holes in the support beam and thus avoid weakening the support beam, and the position of the installation member can also be flexibly adjusted. Further, the installation member has many designs to prevent itself from falling off the support beam during the installation process, which facilitates the successful installation of photovoltaic modules (especially a large number of photovoltaic modules).

### BRIEF DESCRIPTION OF THE DRAWINGS

Other features and advantages of the present disclosure will be readily understood through the following preferred embodiments described in detail with reference to the accompanying drawings, in which the same reference numerals indicate the same or similar components.
FIG. 1 is a perspective view of an installation member according to a first exemplary embodiment of the present disclosure;
FIG. 2 is a side view of the installation member according to the first exemplary embodiment of the present disclosure;
FIG. 3A and FIG. 3B respectively are a schematic perspective view and a schematic side view of a first stage of installing the installation member, according to the first exemplary embodiment of the present disclosure, to a support beam;
FIG. 4 is a schematic side view of a second stage of installing the installation member, according to the first exemplary embodiment of the present disclosure, to the support beam;
FIG. 5A and FIG. 5B respectively are a schematic perspective view and a schematic side view of a third stage of installing the installation member, according to the first exemplary embodiment of the present disclosure, to the support beam;
FIG. 6 is a schematic perspective view showing that the installation member, according to the first exemplary embodiment of the present disclosure, has been installed on the support beam and pre-fastened with a clamping block;
FIG. 7A and FIG. 7B respectively are a schematic front view and a schematic side view of installing a photovoltaic panel frame to the support beam with the installation member, according to the first exemplary embodiment of the present disclosure, and the clamping block, where a fastener has not been screwed tight yet;
FIG. 8A and FIG. 8B respectively are a schematic perspective view and a schematic front view of installing the photovoltaic panel frame to the support beam with the installation member, according to the first exemplary embodiment of the present disclosure, and the clamping block, where the fastener has already been screwed tight;
FIG. 9 is a perspective view of an installation member according to a second exemplary embodiment of the present disclosure;
FIG. 10 is a schematic side view of the installation member, according to the second exemplary embodiment of the present disclosure, in a situation where the second stage is finished and the installation is suspended;
FIG. 11 is a perspective view of an installation member according to a third exemplary embodiment of the present disclosure;
FIG. 12 is a perspective view of an installation member according to a fourth exemplary embodiment of the present disclosure;
FIG. 13A and FIG. 13B respectively are perspective views of an installation member according to a fifth exemplary embodiment of the present disclosure, viewed from different perspectives;
FIG. 14A is a side view of the installation member according to the fifth exemplary embodiment of the present disclosure; and
FIG. 14B is a cross-sectional view taken along line A-A in FIG. 14A;
FIG. 15 is a perspective view of an installation member according to a sixth exemplary embodiment of the present disclosure;
FIG. 16 is a perspective view of an installation member according to a seventh exemplary embodiment of the present disclosure; and
FIG. 17A and FIG. 17B respectively are perspective views of an installation member according to an eighth exemplary embodiment of the present disclosure, viewed from different perspectives.

### DETAILED DESCRIPTION

The implementation and usage of the embodiments are discussed in detail below. However, it is conceivable that the specific embodiments discussed herein are merely intended to illustrate specific ways of implementing and using the present disclosure, and are not intended to limit the scope of the present disclosure. When describing structures and positions of components, the direction-related expressions herein, such as "upper", "lower", "top", and "bottom", are not absolute, but relative. When the components are arranged as shown in the drawings, these direction-related expressions are appropriate, but when the positions of these components in the drawings are altered, these direction-related expressions should be altered accordingly.

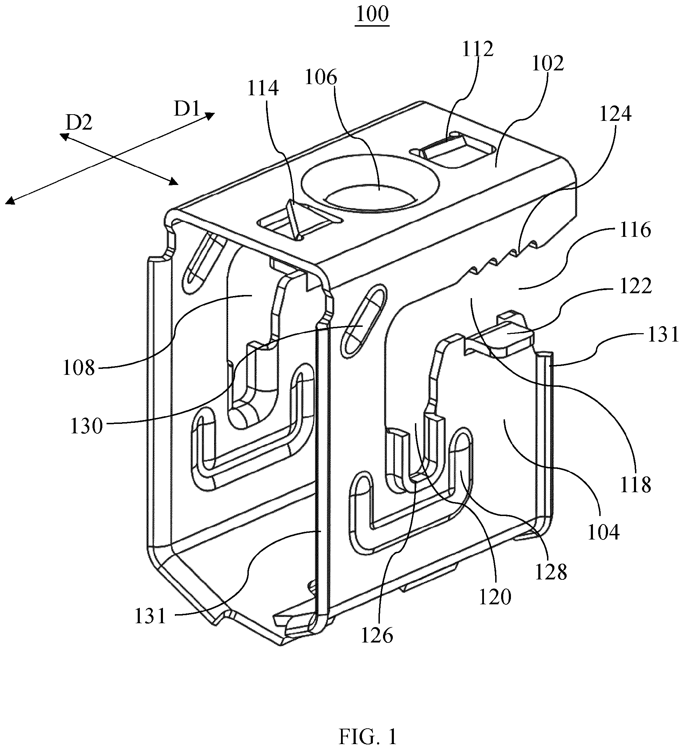

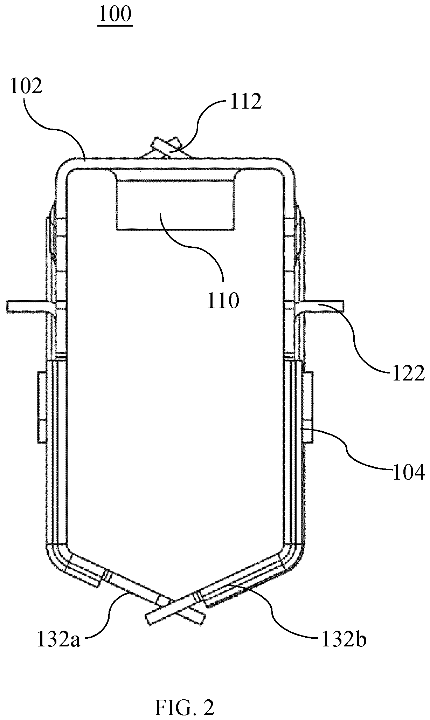

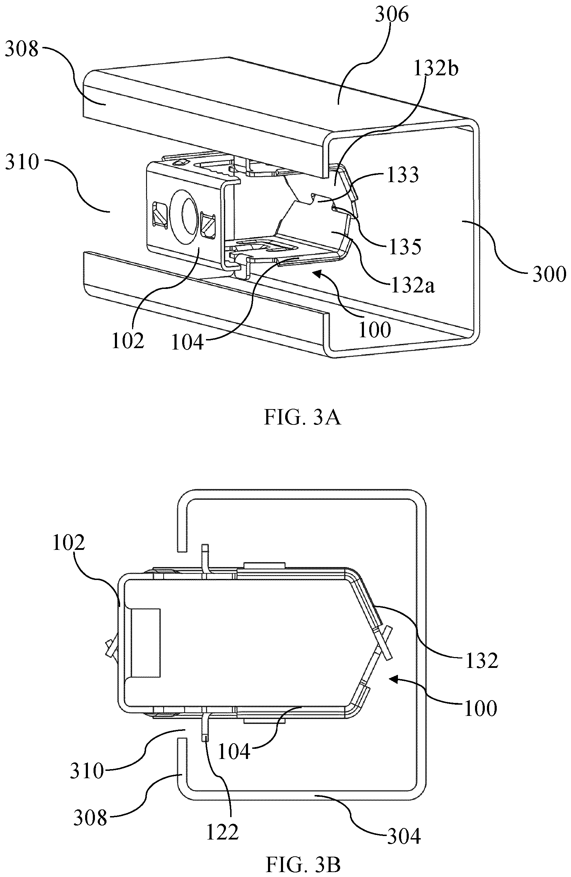

FIGS. 1 and 2 show an installation member 100, according to a first exemplary embodiment of the present disclosure, for installing a photovoltaic module to a support beam. FIGS. 3A to 8B show the process of installing the photovoltaic module 200 to the support beam 300 with the installation member 100, according to the first exemplary embodiment of the present disclosure.

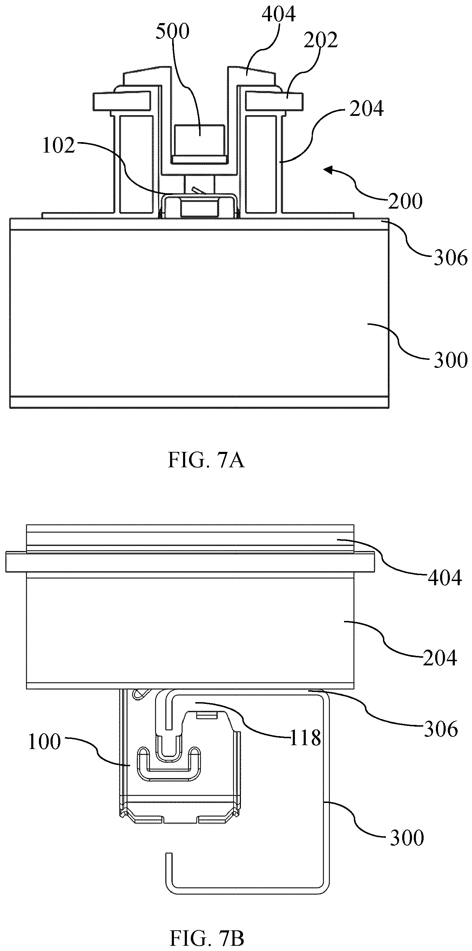

Referring to FIGS. 1, 7A and 7B, the photovoltaic module 200 may include a photovoltaic panel 202 and a photovoltaic panel frame 204 attached to the photovoltaic panel 202. The support beam 300 may be fixed to a roof of a building, a support leg connected to the ground, a mountain, or a pile foundation or floating foundation in a mountain, lake or ocean. The installation member 100 may include a top wall 102 and side wall(s) 104 extending from the top wall 102. The side wall 104 includes a receiving slot 108 for receiving at least part of the support beam 300 to allow the installation member 100 to be installed to the support beam 300. The top wall 102 includes a first fastening hole 106 for a fastener 500 to pass through to fasten the photovoltaic panel frame 204 to the support beam 300.

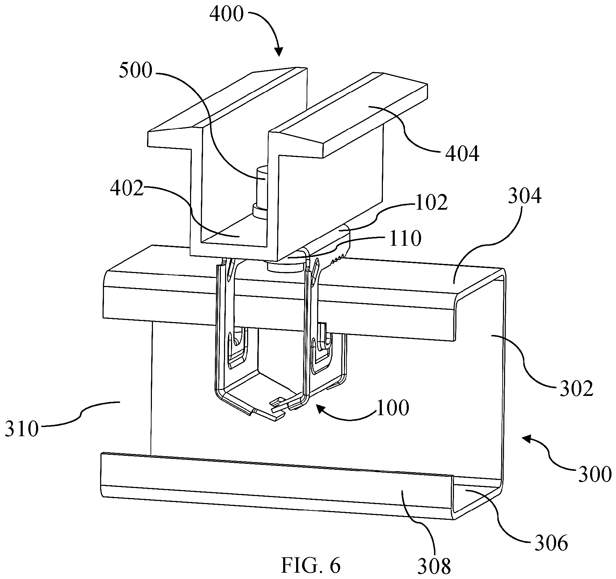

In the embodiment shown in FIGS. 6 to 7B, the photovoltaic panel frame 204 of the photovoltaic module 200 can be installed to the support beam 300 with the installation member 100 and a clamping block 400. Only a portion of the photovoltaic module 200 and the support beam 300 are shown in the figures.

The support beam 300 may have a base 302 and leg(s) 304 extending from the base 302. In the illustrated embodiment, the support beam 300 may be in the form of an elongated C-shaped profile. The support beam 300 may have two legs 304 symmetrically provided on opposite sides of the base 302. Each leg 304 may include a leg body 306 extending from the base 302 and a flange 308 bent from/relative to the leg body 306. The flanges 308 of the two legs 304 may be opposite to each other and define an opening 310 therebetween. In the illustrated embodiment, the leg body 306 may be substantially perpendicular to the base 302 and the flanges 308. Optionally, the support beam 300 may be made of aluminum or steel by stamping or rolling. The clamping block 400 may have a fastening portion 402 and clamping arm(s) 404 extending from the fastening portion 402. A second fastening hole (not shown) is defined in the fastening portion 402. The fastener 500 may at least partially pass through the first fastening hole 106 of the installation member 100 and the second fastening hole of the clamping block 400, thereby fastening the photovoltaic panel frame 204 between the leg body 306 of the support beam 300 and the clamping arm(s) 404 of the clamping block 400. It is conceivable that instead of using a clamping block 400, a second fastening hole may be provided in the photovoltaic panel frame 204, and the photovoltaic panel frame 204 may be fastened to the support beam 300 with the installation member 100 and the fastener 500.

Compared to drilling the fastening hole in the support beam 300, providing the fastening hole in the installation member 100 avoids weakening the strength of the support beam 300 itself, and allows flexible adjustment of the position of the installation member 100 according to the position of the photovoltaic module 200 or the accumulated installation tolerance, so that there is no need to drill new fastening hole on site, and the successful installation of a large number of photovoltaic modules 200 can be ensured.

Referring to FIGS. 1, 2, and 8B, the installation member 100 may be formed by stamping a metal sheet. Compared to forming by casting, the installation member formed by stamping a metal sheet has better flexibility, which allows the installation member to better absorb external resistance and avoids damage of the installation member caused by stress concentration.

The top wall 102 of the installation member 100 may extend in a first direction D1. In the illustrated embodiment, the top wall 102 is substantially rectangular. It is conceivable that the top wall 102 may also have other suitable shapes. The top wall 102 may be integrally formed with a fastening nut 110 in which the first fastening hole 106 is defined. The first fastening hole 106 may have internal threads to be threadedly engaged with the fastener 500 with external threads. The fastener 500 may be, for example, a bolt or stud. In the illustrated embodiment, the fastening nut 110 protrudes towards an interior of the installation member 100.

It is conceivable that, instead of a fastening nut, a fastening hole in the form of an opening may be provided on the top wall 102, and consequently an additional fastening nut may be used to achieve the fastening of the photovoltaic panel frame 204.

Anti-loosening tab(s) 112 may be provided on the top wall 102. The anti-loosening tab 112 may extend toward an exterior of the installation member 100 and have a sharp free end 114. In the illustrated embodiment, the top wall 102 may have two anti-loosening tabs 112 arranged in a centrosymmetric manner around the first fastening hole 106. The free end 114 of each anti-loosening tab 112 may point in a direction opposite to an unscrewing direction of the fastener 500 to prevent the fastener 500 from loosening. In the illustrated embodiment, the two anti-loosening tabs 112 respectively point towards two sides of the installation member 100.

In the illustrated embodiment, the installation member 100 includes two side walls 104 provided symmetrically. The two side walls 104 are respectively located on opposite sides of the top wall 102 in a second direction D2 substantially perpendicular to the first direction D1. Each side wall 104 is provided with one receiving slot 108. The receiving slot 108 may be in the form of a cut. The receiving slot 108 may receive the leg 304 of the support beam 300, and includes a first section 118 having an inlet end 116 and a second section 120 adjoining the first section 118 and forming an angle with the first section 118. The first section 118 and the second section 120 are configured to respectively receive the leg body 306 and the flange 308 of the support beam 300. The first section 118 of the receiving slot 108 may extend substantially in parallel with the first direction D1 and be closer to the top wall 102 than the second section 120. In the illustrated embodiment, the first section 118 may be substantially perpendicular to the second section 120 (that is, the receiving slot 108 is substantially L-shaped), so that the first section 118 and the second section 120 can respectively receive the leg body 306 and the flange 308, that are substantially perpendicular to each other, of the support beam 300.

Optionally, the side wall 104 may be provided with an abutting tab 122. The abutting tab 122 is located on a side, away from the top wall 102, of the first section 118 so as to abut against an inner side of the leg body 306 of the support beam 300 when the photovoltaic panel frame 204 is fastened to the support beam 300. The abutting tab 122 may extend from the side wall 104 toward the exterior of the installation member 100. In the illustrated embodiment, each of the two side walls 104 of the installation member 100 is provided with one abutting tab 122. Optionally, a barb 124 may be provided on the side wall 104, and be arranged on a side, close to the top wall 102, of the first section 118 so as to hook an outer side of the leg body 306 of the support beam 300 when the installation member 100 is installed to the support beam 300. In the illustrated embodiment, the barb 124 may be in the form of sawteeth. The functions of the abutting tab 122 and the barb 124 will be further explained in the following.

Optionally, in order to increase the stiffness of the side wall 104 of the installation member 100, the side wall 104 is provided with stiffener(s) and/or folded rim(s). In the illustrated embodiment, the side wall 104 is provided with stiffeners around the receiving slot 108. In the illustrated embodiment, a first stiffener 126 is provided on the side wall 104 along an edge of the receiving slot 108. The first stiffener 126 surrounds an end, away from the first section 118, of the second section 120 of the receiving slot 108. In the illustrated embodiment, the first stiffener 126 may be in the form of a folded rim and be U-shaped. Optionally, a second stiffener 128 is provided on the side wall 104 and surrounds the first stiffener 126. The second stiffener 128 may be formed by, for example, stamping. In the illustrated embodiment, the second stiffener 128 may also be U-shaped. The first stiffener 126 and the second stiffener 128 may form a double U-shaped structure surrounding the end of the second section 120 of the receiving slot 108, significantly enhancing the stiffness of the side wall 104 of the installation member 100. Optionally, a third stiffener 130 is provided on the side wall 104 and is close to a junction between the first section 118 and the second section 120. In the illustrated embodiment, the third stiffener 130 is substantially strip-shaped.

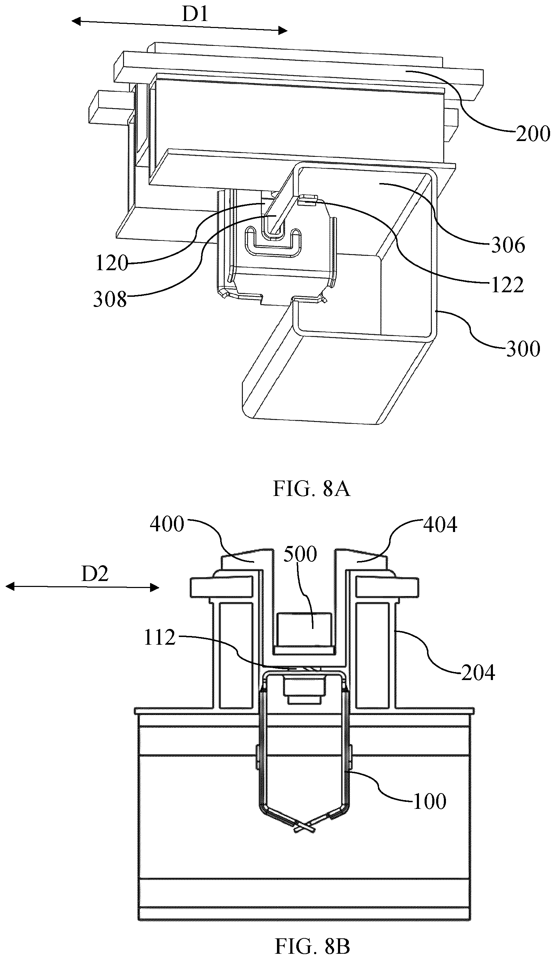

Referring to FIG. 8A, when the photovoltaic module 200 has a tendency to slide along the first direction D1 relative to the support beam 300 due to, for example, its own gravity and wind force, or, when the photovoltaic module 200 has a tendency to separate, in a vertical direction, from the support beam 300 due to, for example, wind force, the first stiffener 126, the second stiffener 128, and the third stiffener 130 may prevent deformation of the side wall 104 of the installation member 100 (especially deformation near the receiving slot 108).

Referring to FIGS. 1, 2, and 3A, the installation member 100 may further include two bottom walls 132a and 132b. The two bottom walls 132a and 132b extend from the ends of the two side walls 104 respectively and extend toward each other, and the bottom walls 132a and 132b interlace with one another and abut against each other. The bottom wall 132a has a first abutting portion 133, and the bottom wall 132b has a second abutting portion 135. The first abutting portion 133 and the second abutting portion 135 can abut against each other to provide support for the side walls 104 of the installation member 100 when the side walls 104 are subjected to pressing force along the second direction D2, thereby preventing deformation of the installation member 100. In the illustrated embodiment, the first abutting portion 133 is in the form of a tab, and the second abutting portion 135 is in the form of a recess. In the illustrated embodiment, folded rims 131 are provided at lateral edges of the side walls 104 and lateral edges of the bottom walls 132a and 132b (as shown in FIG. 1), so as to improve the stiffness of the installation member 100.

As introduced earlier, the photovoltaic module 200 may be applied to various scenarios such as building, mountain, lake, ocean, etc. If the installation member 100 falls off from the support beam 300 during the installation process, it may be difficult to find the installation member 100 or pose a threat to the surrounding people or environment.

In order to increase the difficulty level/decrease the possibility of the installation member 100 accidentally falling off the support beam 300, special designs are made for the installation member 100 in the present disclosure. Not only the difficulty level of the installation member 100 falling off is decreased by increasing the steps required to install the installation member 100 to the support beam 300, but also the design for preventing the installation member 100 from falling off is further provided for each installation step/stage. Such designs are described in detail below.

FIGS. 3A to 5B show an exemplary process of installing the installation member 100 to the support beam 300.

Firstly, referring to FIGS. 3A and 3B, in the first stage of installation, the installation member 100 is placed relative to the support beam 300 in a first orientation as shown in FIGS. 3A and 3B. The side walls 104 of the installation member 100 in the first orientation are substantially parallel to the leg body 306 of the support beam 300. Then, part of the installation member 100 is placed into the support beam 300 through the opening 310 of the support beam 300, so that the bottom walls 132 of the installation member 100 are located inside the support beam 300, and the top wall 102 of the installation member 100 is located outside the support beam 300.

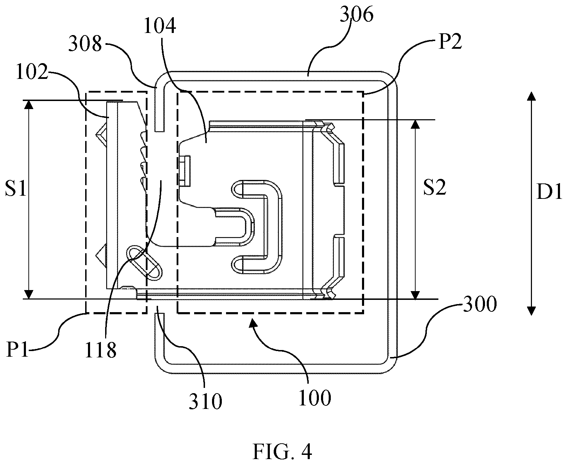

Next, referring to FIG. 4, in the second stage of installation, the installation member 100 is rotated from the first orientation to a second orientation as shown in FIG. 4, so that the flange 308 of the support beam 300 is inserted into the first sections 118 of the receiving slots 108 of the installation member 100. The top wall 102 and the side walls 104 of the installation member 100 in the second orientation are substantially perpendicular to the leg body 306 of the support beam 300.

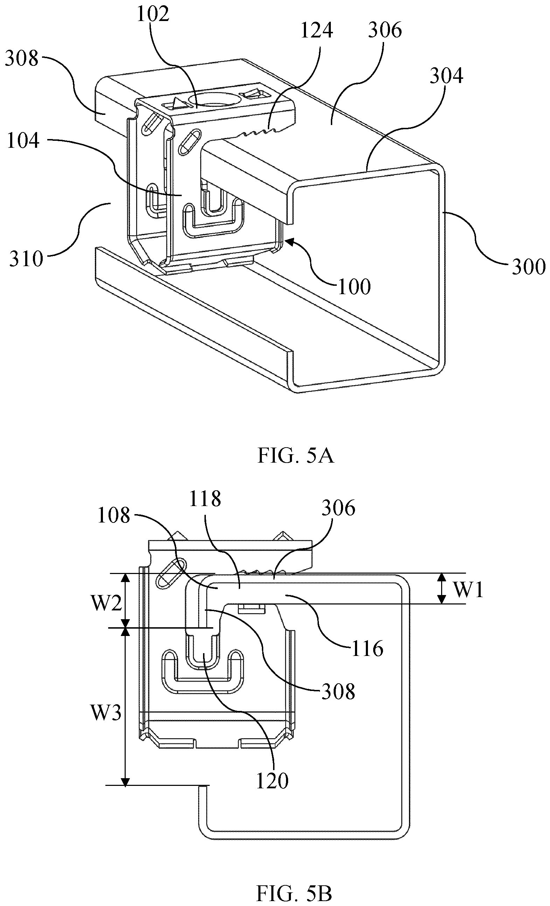

Finally, referring to FIGS. 5A and 5B, in the third stage of installation, the installation member 100 is rotated from the second orientation to a third orientation as shown in FIGS. 5A and 5B, so that the leg body 306 and the flange 308 of the support beam 300 are respectively inserted into the first sections 118 and the second sections 120 of the receiving slots 108 of the installation member 100. In the third orientation, the side walls 104 of the installation member 100 are substantially perpendicular to the leg body 306 of the support beam 300, and the top wall 102 of the installation member 100 is substantially parallel to the leg body 306 of the support beam 300. Hereto, the installation member 100 is installed at the leg 304 of the support beam 300.

Referring to FIGS. 5A and 5B, a width of the first section 118 of the receiving slot 108 is such set to prevent the flange 308 of the support beam 300 from entering the second section 120 in a translational manner through the inlet end 116. In a case that the leg body 306 of the support beam 300 is perpendicular to the flange 308, the width W1 of the first section 118 of the receiving slot 108 may be set to be smaller than the width W2 of the flange 308.

In this way, the leg 304 of the support beam 300 cannot be directly inserted into the receiving slot 108 from the inlet end 116 of the receiving slot 108 along a horizontal direction (in terms of the orientation in FIG. 5B), and consequently the leg body 306 and the flange 308 cannot be respectively received in the first section 118 and the second section 120 by inserting the leg 304 of the support beam 300 along the horizontal direction. Moreover, the leg 304 of the support beam 300 that has been already in position in the receiving slot 108 cannot be moved out of the receiving slot 108 through translation, so that it will be difficult for the installation member 100 that has been already installed in position to fall off the support beam 300.

In this case, when installing the installation member 100 to the support beam 300, as shown in FIGS. 4 to 5B, the installation member 100 is partially placed into the support beam 300 in the second orientation, with the first section 118 of the receiving slot 108 of the installation member 100 being aligned with the flange 308 of the support beam 300, and the installation member 100 is then rotated to the third orientation to complete the installation of the installation member 100.

In order to further increase the installation steps of the installation member 100 and consequently increase the difficulty level of the installation member 100 falling off, the size of the installation member 100 may be such set to prevent the installation member 100 in the second orientation from translating into the support beam 300 directly through the opening 310. Specifically, as shown in FIGS. 4 and 5B, the installation member 100 may include or be divided into a first part P1 and a second part P2 which are respectively located on opposite sides of the first section 118 of the receiving slot 108. The first part P1 includes the top wall 102. The dimension S2 of the second part P2 in the first direction D1 may be greater than the width W3 of the opening 310, so that it is difficult for the installation member 100 oriented in the second orientation to translate into the support beam 300 directly through the opening 310, and it is also difficult for the installation member 100 that has already entered the support beam 300 to translate out of the support beam 300. In this case, during the process of installing the installation member 100 to the support beam 300, as shown in FIGS. 3A to 4, the installation member 100 should be first moved into the support beam 300 via the opening 310 in the first orientation and then rotated to the second orientation, such that the first section 118 of the receiving slot 108 of the installation member 100 is aligned with the flange 308 of the support beam 300. In addition, the dimension S1 of the first part P1 in the first direction D1 may also be greater than the width W3 of the opening 310 to prevent the installation member 100 in the second orientation from completely entering the support beam 300.

To be brief, the width of the first section 118 of the receiving slot 108 is such set to prevent the flange 308 of the support beam 300 from entering the second section 120 in a translational manner through the inlet end 116, and the dimension S2 of the second part P2 in the first direction D1 is set to be greater than the width W3 of the opening 310. With the above configuration, three stages as described above are required, by way of example, to install the installation member 100 to the support beam 300, which increases the difficulty level of the installation member 100 accidentally falling off the support beam 300.

In addition, for each stage of installation, the design of the installation member 100 of the present disclosure may also prevent the installation member 100 from falling off.

Specifically, referring to FIGS. 3A and 3B, if the installation is suspended after the first stage of installation is completed, in terms of the orientation of FIG. 3B, in the absence of external force, the lower side wall 104 of the installation member 100 would abut against the lower leg 304 of the support beam 300, and the abutting tab 122 extending outwardly of the installation member 100 would abut against the flange 308 of the support beam 300, preventing the installation member 100 from falling off the support beam 300.

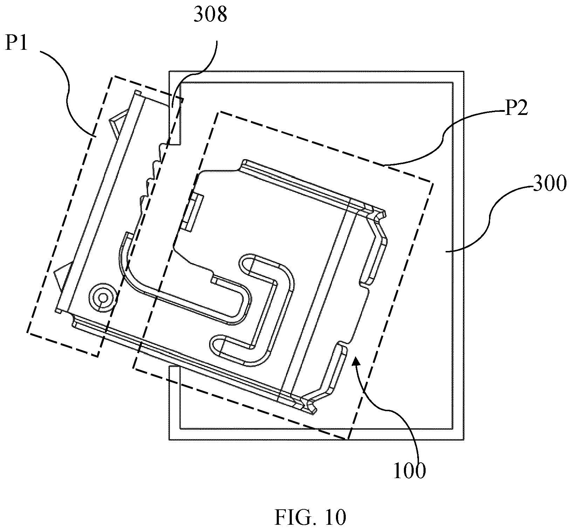

Referring to FIG. 4, if the installation is suspended after the second stage of installation is completed, it would be difficult for the installation member 100 to escape from the support beam 300 as the dimension S2 of the second part P2 of the installation member 100 in the first direction D1 is greater than the width W3 of the opening 310. Moreover, since the second part P2 of the installation member 100 is relatively heavier and the dimension S1 of the first part P1 of the installation member 100 in the first direction D1 is greater than the width W3 of the opening 310, in the absence of external force, the installation member 100 would tilt in a manner as shown in FIG. 10, and the first part P1 of the installation member 100 hooks the flange 308 of the support beam 300, thereby retaining part of the installation member 100 inside the support beam 300.

Referring to FIG. 5A and FIG. 5B, if the third stage of installation is completed, the barb 124 of the installation member 100 would hook the outer side of the leg body 306 of the support beam 300, to prevent the installation member 100 from falling off the support beam 300.

Referring to FIG. 6, after the installation member 100 is installed in place on the support beam 300, the clamping block 400 may be placed on the top wall 102 of the installation member 100, and the second fastening hole in the clamping block 400 may be aligned with the first fastening hole 106 of the fastening nut 110 on the installation member 100, and then the fastener 500 is pre-screwed into the fastening nut 110 of the installation member 100 through the second fastening hole.

Afterwards, referring to FIGS. 7A and 7B, the photovoltaic panel frame 204 may be placed between the clamping arm 404 of the clamping block 400 and the leg body 306 of the support beam 300, by, for example, moving the installation member 100 and the clamping block 400. At this time, the fastener 500 is not screwed tight, and the side, close to the top wall 102, of the first section 118 of the receiving slot 108 contacts the outer side of the leg body 306 of the support beam 300.

Finally, with reference to FIGS. 1, 8A, and 8B, the fastener 500 may be further screwed tight, and the installation member 100 may be moved towards the clamping block 400 along the axis direction of the fastener 500 until the receiving slot 108 of the installation member 100 engages the leg 304 of the support beam 300 and the abutting tab 122 abuts against the inner side of the leg body 306. At this time, the installation member 100 is at least partially located inside the support beam 300 and is fastened to the support beam 300, and the photovoltaic panel frame 204 is clamped between the clamping arm 404 of the clamping block 400 and the leg body 306 of the support beam 300, such that the photovoltaic panel frame 204 is fastened to the support beam 300. The ability of the installation member 100 to resist the external force along the second direction D2 (that is, along the longitudinal direction of the support beam 300) may be effectively improved through the abutment between the abutting tab 122 and the support beam 300.

In addition, after the fastener 500 is screwed tight, the sharp free ends 114 of the anti-loosening tabs 112 of the installation member 100 pierce into the clamping block 400. This may prevent the installation member 100 from being rotated relative to the clamping block 400 due to the external force and prevent the consequent loosening of the fastener 500. Even if the fastener 500 is slightly loose and a small clearance is thereby generated between the installation member 100 and the clamping block 400, the anti-loosening tabs 112 having elasticity may deflect upwards by means of their own elasticity, to compensate for the small clearance, thereby avoiding further loosening of the fastener 500 caused by the small clearance.

The above steps of fastening the photovoltaic module 200 to the support beam 300 with the installation member 100 and the clamping block 400 are only exemplary. It is conceivable that the installation member 100 and the clamping block 400 may be first pre-fixed via the fastener 500; then the installation member 100 and the clamping block 400 may be installed to the support beam 300; and finally the photovoltaic panel frame 204 may be placed between the clamping arm 404 of the clamping block 400 and the leg body 306 of the support beam 300, by, for example, moving the installation member 100 and the clamping block 400, and the fastener 500 may be screwed tight, to complete the fastening operation.

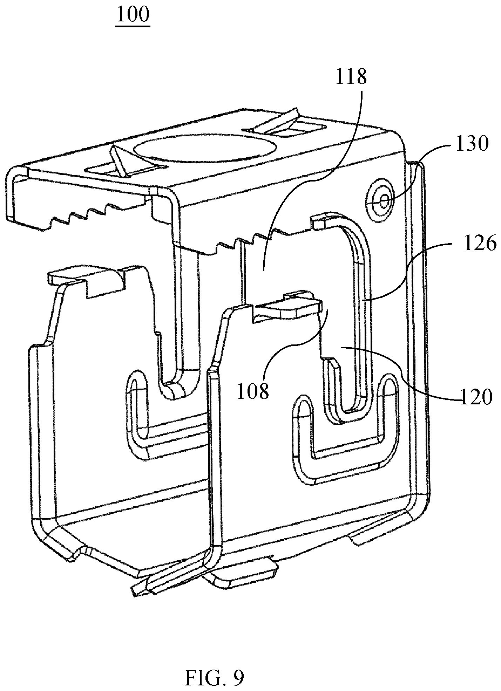

FIG. 9 to FIG. 10 show an installation member 100 according to a second exemplary embodiment of the present disclosure. Referring to FIG. 9, the installation member according to the second exemplary embodiment of the present disclosure is similar to the installation member according to the first exemplary embodiment of the present disclosure, and the main difference lies in the following aspects. The first stiffener 126 of the installation member 100 according to the second exemplary embodiment of the present disclosure is longer. The first stiffener 126 extends around the end, away from the first section 118, of the second section 120 of the receiving slot 108 and extends to the junction between the first section 118 and the second section 120. Moreover, the third stiffener 130 is substantially circular. These designs provide further enhanced stiffness for the installation member 100, and also allow a reduction in the thickness of the sheet of the installation member 100, thereby reducing the weight of the installation member 100.

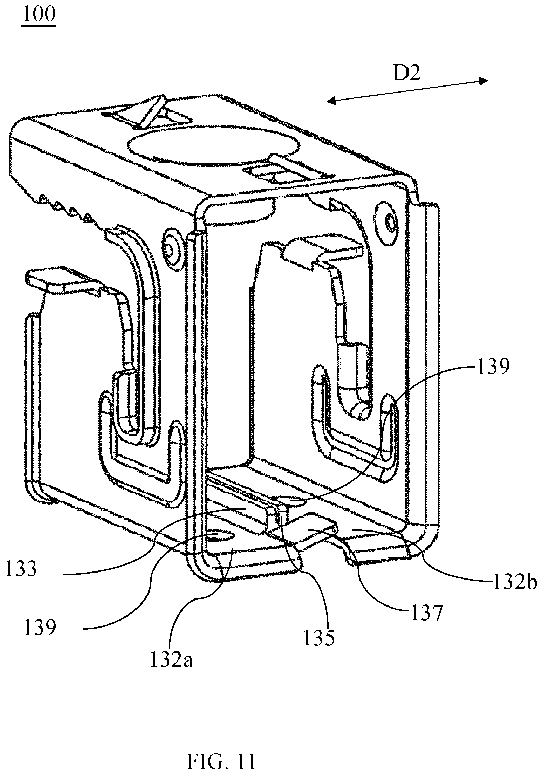

FIG. 11 shows an installation member 100 according to a third exemplary embodiment of the present disclosure. The installation member according to the third exemplary embodiment of the present disclosure is similar to the installation member according to the second exemplary embodiment of the present disclosure, and the main difference lies in the following aspects. The first abutting portion 133 of the bottom wall 132a and the second abutting portion 135 of the bottom wall 132b of the installation member 100 according to the third exemplary embodiment of the present disclosure are each in the form of a folded rim. The first abutting portion 133 and the second abutting portion 135 can abut against each other, to prevent deformation of the installation member 100 especially when subjected to an external force along the second direction D2. The bottom wall 132a has a lug 137 protruding towards the bottom wall 132b, to abut against the bottom wall 132b when the installation member is subjected to an external force, especially at an angle to the second direction D2, to further prevent deformation of the installation member 100. In addition, the bottom walls 132a and 132b are each provided with a substantially circular fourth stiffener 139, to increase the stiffness of the bottom walls 132a and 132b.

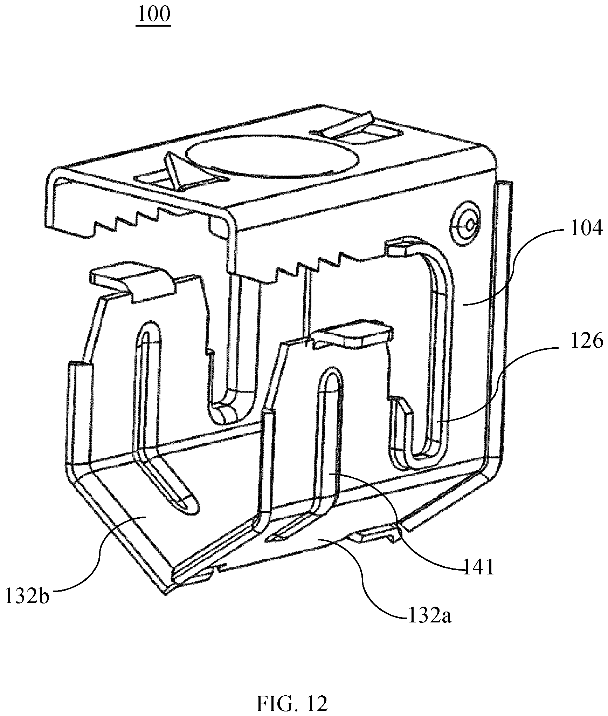

FIG. 12 shows an installation member 100 according to a fourth exemplary embodiment of the present disclosure. The installation member according to the fourth exemplary embodiment of the present disclosure is similar to the installation member according to the second exemplary embodiment of the present disclosure, and the main difference lies in the following aspects. The obtuse angle between each bottom wall 132a /132b and the corresponding side wall 104 is greater. The installation member 100 has strip-shaped fifth stiffeners 141 that extend from the side walls 104 respectively to the bottom walls 132a and 132b, to increase the stiffness of the installation member 100.

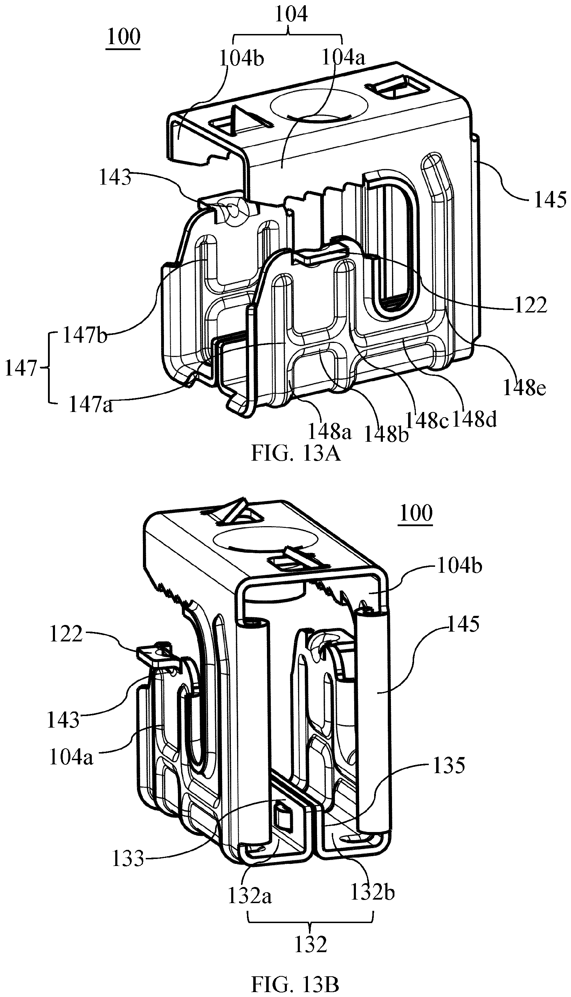

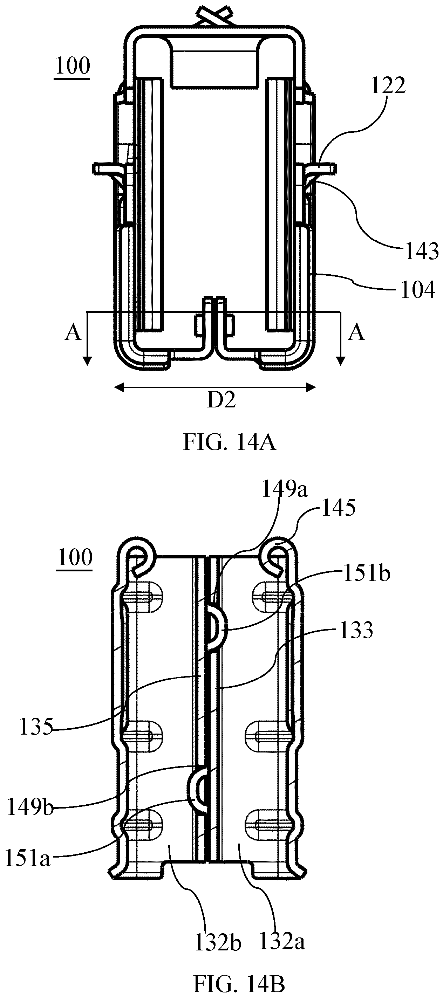

FIG. 13A to FIG. 14B show an installation member 100 according to a fifth exemplary embodiment of the present disclosure. The installation member according to the fifth exemplary embodiment of the present disclosure is similar to the installation member according to the third exemplary embodiment of the present disclosure, and the main difference therebetween lies in the following aspects.

Referring to FIGS. 13A to 14B, the installation member 100 according to the fifth embodiment includes side walls 104a, 104b (may be collectively referred to as side walls 104 hereinafter) and bottom walls 132a, 132b (may be collectively referred to as bottom walls 132 hereinafter). The side walls 104a and 104b are symmetrically provided with respect to each other. The bottom wall 132a extends from the bottom of the side wall 104a, the bottom wall 132b extends from the bottom of the side wall 104b, and the bottom wall 132a and the bottom wall 132b extend towards each other. A reinforcing rib 143 is provided at the junction between each side wall 104 and the corresponding abutting tab 122. A triangular support is formed between the side wall 104 and the abutting tab 122 by providing the reinforcing rib 143, to further improve the stiffness of the abutting tab 122. The reinforcing rib 143 may be formed by, for example, stamping.

In the fifth embodiment, a rolled rim 145 is formed at a lateral edge of the side wall 104 of the installation member 100 and curved toward the interior of the installation member 100. Each side wall 104 of the installation member 100 may have a rolled rim 145, and the rolled rim 145 may have a substantially circular cross-section. Providing the rolled rim 145 may effectively increase the stiffness of the side wall 104.

In the fifth embodiment, the installation member 100 further includes stiffener structures 147a and 147b (collectively referred to as stiffener structures 147 hereinafter). The stiffener structure 147a extends from the side wall 104a to the corresponding bottom wall 132a, and the stiffener structure 147b extends from the side wall 104b to the corresponding bottom wall 132b. Each stiffener structure 147 may include multiple stiffeners 148a, 148b, 148c, 148d, and 148e. These stiffeners intersect vertically and horizontally, so that the stiffener structure is substantially grid-like. Since the stiffener structure extends from the side wall to the bottom wall, the overall stiffness of the installation member is increased, which may reduce the respective deformation of the side wall and the bottom wall and also the relative deformation of the side wall and the bottom wall (the relative deformation may be, for example, a change in the included angle between the side wall and the bottom wall).

In the fifth embodiment, the first abutting portion 133 of the bottom wall 132a and the second abutting portion 135 of the bottom wall 132b of the installation member 100 are each in the form of a folded rim. In the illustrated embodiment, the first abutting portion 133 and the second abutting portion 135 may both extend substantially in parallel with the side wall 104 towards the interior of the installation member 100. The installation member 100 includes a limiting structure arranged on at least one of the first abutting portion 133 and the second abutting portion 135 and configured to prevent the first abutting portion and the second abutting portion from being misaligned with and/or separated from each other. In the fifth embodiment, the limiting structure includes a first limiting hole 149a and a first limiting protrusion 151a provided on the first abutting portion 133, and also includes a second limiting hole 149b and a second limiting protrusion 151b provided on the second abutting portion 135. In the illustrated embodiment, the first limiting hole 149a and the second limiting hole 149b respectively are through holes that run through the first abutting portion 133 and the second abutting portion 135. The first limiting protrusion 151a and the second limiting protrusion 151b protrude substantially perpendicular to the first abutting portion 133 and the second abutting portion 135, respectively. The first limiting protrusion 151a is inserted into and passed through the second limiting hole 149b, and the second limiting protrusion 151b is inserted into and passed through the first limiting hole 149a, so as to prevent the first abutting portion 133 and the second abutting portion 135 from being misaligned with and/or separated from each other when the installation member 100 is subjected to an external force (the photovoltaic panel installed via the installation member 100 exerts an external force onto the installation member 100 when subjected to, for example, a wind force), especially when subjected to an external force at an angle to the second direction D2. This would further warrant that the first abutting portion 133 and the second abutting portion 135 can stably abut against each other, and avoid deformation or damage of the installation member 100.

It is conceivable that the first limiting hole 149a and the second limiting hole 149b may not be through holes but only recessed relative to the corresponding first abutting portion 133 and second abutting portion 135. It is also conceivable that in some other embodiments, one or more limiting holes may be provided only on one of the first abutting portion 133 and the second abutting portion 135, and one or more limiting protrusions may be correspondingly provided on the other of the first abutting portion 133 and the second abutting portion 135.

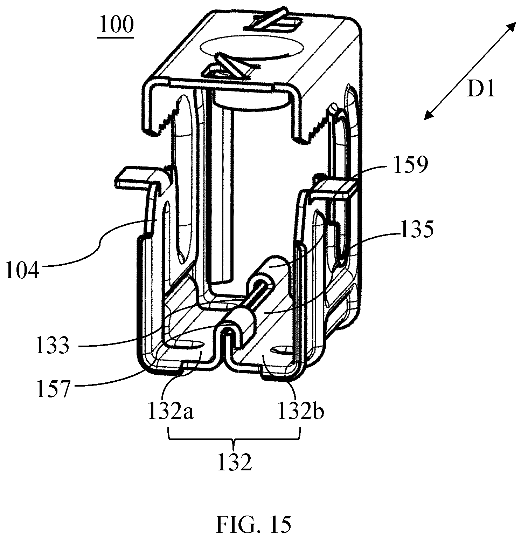

FIG. 15 shows an installation member 100 according to a sixth exemplary embodiment of the present disclosure. The installation member according to the sixth exemplary embodiment of the present disclosure is similar to the installation member according to the fifth exemplary embodiment of the present disclosure, and the main difference therebetween lies in the following aspects.

Referring to FIG. 15, in the sixth embodiment, the first abutting portion 133 of the bottom wall 132a and the second abutting portion 135 of the bottom wall 132b of the installation member 100 are each in the form of a folded rim. The first abutting portion 133 and the second abutting portion 135 may both extend substantially in parallel with the side wall 104 towards the interior of the installation member 100. The installation member 100 includes a limiting structure arranged on at least one of the first abutting portion 133 and the second abutting portion 135 and configured to prevent the first abutting portion 133 and the second abutting portion 135 from being misaligned with and/or separated from each other. In the sixth embodiment, the limiting structure includes a first limiting hook 157 provided on the first abutting portion 133 and a second limiting hook 159 provided on the second abutting portion 135. The first limiting hook 157 hooks the second abutting portion 135, and the second limiting hook 159 hooks the first abutting portion 133, thereby preventing the first abutting portion 133 and the second abutting portion 135 from being misaligned with and/or separated from each other when the installation member 100 is subjected to an external force.

In the illustrated embodiment, the first abutting portion 133 and the second abutting portion 135 both extend substantially along the first direction D1 of the installation member 100, and have a substantially same width (that is, the dimension in the first direction D1). The first limiting hook 157 and the second limiting hook 159 are spaced apart along the first direction D1 of the installation member 100.

It is conceivable that the width of the first limiting hook 157 and second limiting hook 159 may be adjusted according to actual needs. Preferably, in some other embodiments, the sum of the width of the first limiting hook 157 and the width of the second limiting hook 159 (that is, the dimensions in the first direction D1) is approximately equal to the width of the first abutting portion 133/second abutting portion 135, to more effectively prevent the first abutting portion 133 and the second abutting portion 135 from being misaligned with and/or separated from each other. More preferably, the width of the first limiting hook 157 and the width the second limiting hook 159 are each approximately equal to half of the width of the first abutting portion 133/second abutting portion 135.

It is conceivable that in some other embodiments, only one of the first abutting portion 133 and the second abutting portion 135 may be provided with limiting hook(s).

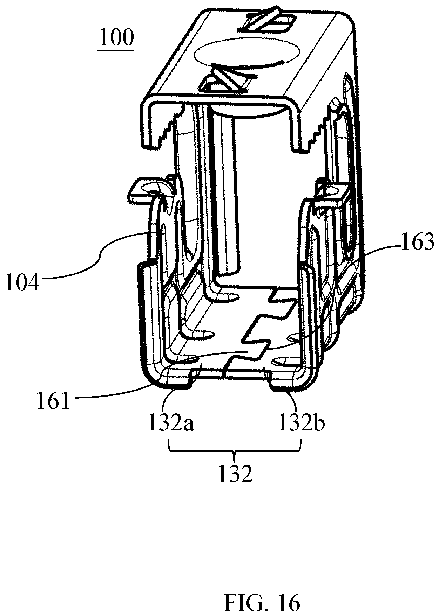

FIG. 16 shows an installation member 100 according to a seventh exemplary embodiment of the present disclosure. The installation member according to the seventh exemplary embodiment of the present disclosure is similar to the installation member according to the fifth exemplary embodiment of the present disclosure, and the main difference therebetween lies in the following aspects.

Referring to FIG. 16, in the seventh embodiment, the bottom walls 132a and 132b of the installation member 100 extend substantially along the same plane towards each other. The bottom walls 132a and 132b are both substantially perpendicular to the side walls 104. The installation member 100 includes a limiting structure arranged on at least one of the bottom walls 132a and 132b and configured to prevent the two bottom walls 132a and 132b from being misaligned with and/or separated from each other.

In the seventh embodiment, the limiting structure includes limiting tabs 161 provided on the bottom wall 132a and limiting notchs 163 provided on the bottom wall 132b. In the illustrated embodiment, the limiting notch 163 may be in the form of a dovetail slot. The limiting notch 163 may be formed by, for example, punching. The limiting tab 161 may be in an interference fit with the limiting notch 163, thereby preventing the bottom wall 132a and the bottom wall 132b from being misaligned with and/or separated from each other when the installation member 100 is subjected to an external force.

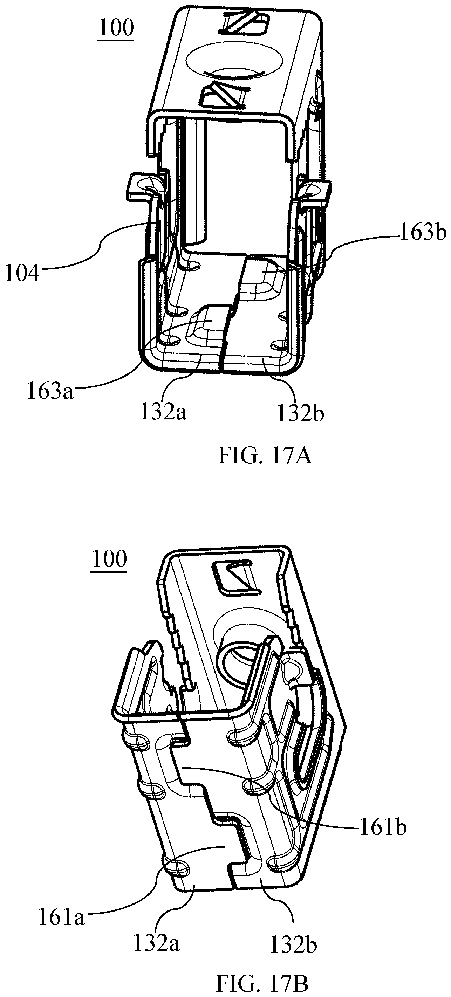

FIG. 17A and FIG. 17B show an installation member 100 according to an eighth exemplary embodiment of the present disclosure. The installation member according to the eighth exemplary embodiment of the present disclosure is similar to the installation member according to the seventh exemplary embodiment of the present disclosure, and the main difference therebetween lies in the following aspects.

Referring to FIG. 17A and FIG. 17B, in the eighth embodiment, the bottom walls 132a and 132b of the installation member 100 extend substantially along the same plane towards each other. The bottom walls 132a and 132b are both substantially perpendicular to the side walls 104. The installation member 100 includes a limiting structure arranged on at least one of the bottom walls 132a and 132b and configured to prevent the two bottom walls 132a and 132b from being misaligned with and/or separated from each other.

In the eighth embodiment, the limiting structure includes a first limiting tab 161a and first limiting notch 163a provided on the bottom wall 132a, and also includes a second limiting tab 161b and second limiting notch 163b provided on the bottom wall 132b. In the illustrated embodiment, the first limiting notch 163a and the second limiting notch 163b are recessed towards the interior of the installation member 100 respectively from the bottom wall 132a and the bottom wall 132b. The first limiting tab 161a is received in the second limiting notch 163b, and the second limiting tab 161b is received in the first limiting notch 163a, thereby preventing the bottom wall 132a and the bottom wall 132b from being misaligned with and/or separated from each other when the installation member 100 is subjected to an external force.

It is conceivable that the arrangement and number of limiting tabs and limiting notches are not limited thereto. For example, it is conceivable that one limiting notch may be recessed towards the interior of the installation member from the bottom wall, while the other limiting notch may be recessed towards the exterior of the installation member from the bottom wall.

It should be understood that the embodiments shown in FIGS. 1 to 17B only illustrate the shape, size and arrangement of each optional component of the installation member according to the present disclosure. However, these embodiments are merely intended to illustrate rather than limit. Other shapes, sizes and arrangements may be adopted without departing from the idea and scope of the present disclosure.

The technical contents and technical features of the present disclosure have been disclosed above. However, it can be understood that, those skilled in the art can make various changes and improvements to the above-disclosed concept under the creative concept of the present disclosure, and all these various changes and improvements still fall within the scope of protection of the present disclosure. The description of the foregoing embodiments is illustrative rather than restrictive, and the scope of protection of the present disclosure is determined by the appended claims.

## Claims

1. An installation member for installing a photovoltaic panel frame to a support beam, wherein the installation member is formed by stamping a metal sheet and comprises a top wall and a side wall extending from the top wall,
the side wall comprises a receiving slot for receiving at least part of the support beam to allow the installation member to be installed to the support beam, and
the top wall comprises a fastening hole through which a fastener passes through for fastening the photovoltaic panel frame to the support beam.

2. The installation member according to claim 1, wherein the installation member is configured to install the photovoltaic panel frame to the support beam comprising a base and a leg extending from the base, wherein the receiving slot is configured to receive the leg of the support beam.

3. The installation member according to claim 2, wherein the receiving slot is adapted to be engaged with the leg when the fastener is fastened in place such that the installation member is at least partially located inside the support beam and is fastened to the support beam.

4. The installation member according to claim 2, wherein the receiving slot comprises a first section having an inlet end and a second section adjoining the first section and forming an angle with the first section, wherein the leg of the support beam comprises a leg body extending from the base and a flange bent from the leg body, and the first section and the second section are configured to respectively receive the leg body and the flange of the support beam.

5. The installation member according to claim 4, wherein a width of the first section of the receiving slot is set to prevent the flange of the support beam from entering the second section in a translational manner from the inlet end.

6. The installation member according to claim 5, wherein the width of the first section of the receiving slot is set to be smaller than a width of the flange.

7. The installation member according to claim 4, wherein the top wall extends in a first direction and the first section of the receiving slot extends substantially in parallel with the first direction.

8. The installation member according to claim 7, wherein the installation member comprises a first part and a second part which are respectively located on opposite sides of the first section; the first part comprises the top wall; the support beam comprises two legs respectively arranged on opposite sides of the base, and an opening is defined between the flanges of the two legs; wherein a dimension of the second part in the first direction is greater than a width of the opening.

9. The installation member according to claim 8, wherein a dimension of the first part in the first direction is greater than the width of the opening.

10. The installation member according to any one of claims 4 to 9, wherein the side wall is provided with an abutting tab, and the abutting tab is arranged on a side of the first section away from the top wall so as to abut against an inner side of the leg body of the support beam when the photovoltaic panel frame is fastened to the support beam.

11. The installation member according to claim 10, wherein the abutting tab extends from the side wall toward an exterior of the installation member.

12. The installation member according to claim 10, wherein a reinforcing rib is provided at a junction between the side wall and the abutting tab.

13. The installation member according to any one of claims 4 to 9, wherein the side wall is provided with a barb, and the barb is arranged on a side of the first section close to the top wall so as to hook an outer side of the leg body of the support beam when the installation member is installed to the support beam.

14. The installation member according to any one of claims 4 to 9, wherein the side wall is provided with a stiffener around the receiving slot.

15. The installation member according to claim 14, wherein the stiffener comprises a first stiffener arranged on the side wall along an edge of the receiving slot and surrounding at least an end of the second section away from the first section.

16. The installation member according to claim 15, wherein the stiffener comprises a second stiffener arranged on the side wall and surrounding at least part of the first stiffener.

17. The installation member according to claim 14, wherein the stiffener comprises a third stiffener arranged on the side wall and close to a junction between the first section and the second section.

18. The installation member according to any one of claims 7 to 9, wherein the installation member comprises two side walls provided symmetrically, and the two side walls are respectively located on opposite sides of the top wall in a second direction substantially perpendicular to the first direction.

19. The installation member according to claim 18, wherein the installation member comprises two bottom walls extending from the two side walls respectively and extending toward each other.

20. The installation member according to claim 19, wherein the installation member comprises a limiting structure arranged on at least one of the two bottom walls and configured to prevent the two bottom walls from being misaligned with each other and/or separated from each other.

21. The installation member according to claim 19, wherein one of the two bottom walls comprises a first abutting portion, and the other of the two bottom walls comprises a second abutting portion, wherein the first abutting portion and the second abutting portion abut against each other.

22. The installation member according to claim 21, wherein
the first abutting portion is in the form of a tab and the second abutting portion is in the form of a recess; or
each of the first abutting portion and the second abutting portion is in the form of a folded rim.

23. The installation member according to claim 21, wherein each of the first abutting portion and the second abutting portion is in the form of a folded rim, wherein the installation member comprises a limiting structure arranged on at least one of the first abutting portion and the second abutting portion and configured to prevent the first abutting portion and the second abutting portion from being misaligned with each other and/or separated from each other.

24. The installation member according to claim 19, wherein a folded rim is formed at a lateral edge of the side wall and/or a lateral edge of the bottom wall.

25. The installation member according to claim 19, wherein the installation member comprises a stiffener structure, and the stiffener structure comprises a plurality of intersecting stiffeners and extends from the side wall to the corresponding bottom wall.

26. The installation member according to any one of claims 1 to 9, wherein a rolled rim is provided at a lateral edge of the side wall and curved toward an interior of the installation member.

27. The installation member according to any one of claims 1 to 9, wherein the top wall comprises an anti-loosening tab extending toward an exterior of the installation member and having a sharp free end.

28. The installation member according to claim 27, wherein the top wall comprises two anti-loosening tabs arranged in a centrosymmetric manner around the fastening hole, wherein the free end of each anti-loosening tab points in a direction opposite to an unscrewing direction of the fastener.

29. The installation member according to any one of claims 1 to 9, wherein the top wall is integrally formed with a fastening nut defining the fastening hole.
